# EUROPÄISCHE PATENTANMELDUNG

(11) **EP 0 587 017 A1**
(43) Veröffentlichungstag der Anmeldung: **16.03.1994**
(21) Anmeldenummer: 93113882.0
(22) Anmeldetag: 31.08.1993
(51) Int. Cl.: A01G 1/04

(54) **Festes Nährsubstrat sowie Verwendung des Nährsubstrates als Brutmaterial**

(30) Priorität: 09.09.1992 CH 2839/92
(71) Anmelder: SYLVAN PILZ AG, CH-8625 Gossau-Zürich (CH)
(72) Erfinder: Stadelmann, René J., Dr., CH-8617 Mönchaltorf (CH)
(74) Vertreter: Fillinger, Peter, Dr.

(57) **Zusammenfassung**

Die neue Erfindung schlägt ein Nährsubstrat beziehungsweise Brutmaterial für die Pilzzucht vor, das aus gereinigten Fruchtkörpern beziehungsweise Samen von Pflanzen besteht, welche im Überschusswasser auf 40 bis 60 % Wassergehalt unter Erhaltung der Kornstruktur gequollen und durch eine chemische Behandlung keimfrei gemacht wurde. Die Aufquellung sowie die chemische Behandlung erfolgen mit mässiger Wärme von 50 bis 99°C, so dass die Fruchtkörper beziehungsweise Samen frei von Bräunung ist, und der Keimling abgetötet ist. Jedes Einzelkorn kann mit einer Haft- beziehungsweise Nährsubstanz überzogen werden, so dass diese zusammen mit einem Puderüberzug einen pH-Wert von etwa 7 ergeben. Das Brutmaterial weist keine Klumpenbildung und daher eine gute Streufähigkeit sowie sehr gute, regelmässige Wachstumseigenschaften auf.

## Beschreibung

Die Erfindung betrifft ein Nährsubstrat gemäss dem Oberbegriff des Anspruches 1.

Eine Voraussetzung für die Pilzzucht ist ein Brutmaterial, das heisst ein Nährsubstrat, bewachsen mit Mikroorganismen in Reinkultur und hat eine grosse Verbreitung bei der Pilzzucht. In ein speziell vorbereitetes Kompostbeet werden die zuvor mit dem gewünschten Pilzmyzel bewachsenen Körner als Brutmaterial eingestreut. Grundsätzlich ist dafür eine gleichmässige Verteilung der Brutkörner erwünscht, damit der Kompost in nützlicher Zeit durchwachsen wird und die Pilzernte auf der ganzen Fläche regelmässig erfolgen kann.

Das Nährsubstrat wird je nach Sorte und Anwendung auf einen Wassergehalt von etwa 42 bis 50 % gebracht. Der Kompost seinerseits weist optimale Werte für Feuchtigkeit und Temperatur auf. Bei diesen Bedingungen finden aber nicht nur das gewünschte Pilzmyzel, sondern auch eine grosse Vielfalt an nicht erwünschten Bakterien, Schimmelpilzen und anderem Pilzmyzel beziehungsweise Pilzsporen ideale Vermehrungsbedingungen zugang.

Die Hauptforderung an das Brutmaterial liegt deshalb darin, dass das Nährsubstrat ausschliesslich mit den gewünschten Mikroorganismen in Reinkultur bewachsen wird. Es ist zu vermeiden, dass nebst den gewünschten Pilzkulturen andere, insbesondere Mikroorganismen als Konkurrenten wuchern und jene im Wachstum hemmen. Bekannt ist die Verwendung von Roggen als Ausgangskornmaterial für das Nährsubstrat, das vorgängig der Impfung mit der gewünschten Reinkultur zur Abtötung aller störenden Fremdkeime, einer vollständigen Sterilisation unterworfen wird.

In der US-PS Nr. 2 932 862 ist die zur Zeit fortschrittlichste Herstell-Methode für Brutmaterial zur Speise-Pilzzucht dargestellt. Es wird dabei entsprechend der Praxis in der pharmazeutischen Industrie beziehungsweise der entsprechenden Spitalpraxis das Ausgangskornmaterial bei einer Temperatur von mindestens 122°C sterilisiert. Dies geschieht unter Anwendung von Heissluft oder Heissdampf unter einem entsprechenden Druck in einem Trommelmischer von V-förmiger Gestalt. Um eine absolute Sterilisation zu erreichen, wird eine Behandlung bei der genannten Temperatur sowie dem entsprechenden Druck während 35 - 120 Minuten, gefordert. Durch die hohe Temperatur erhalten die Körner eine bräunliche Farbe, sie werden caramelisiert und ein Teil der Nährstoffe werden im Wert reduziert. Anschliessend wird das Nährsubstrat abgekühlt, geimpft und in einen Inkubationsbehälter abgefüllt. Der eigentliche Nachteil dieser Methode liegt darin, dass wegen der hohen Sterilisationstemperatur unvermeidlich ein Teil der Körner platzen oder reissen können. Das Pilzmyzel findet den leichtesten Zugang zu den Nährstoffen bei beschädigten und geplatzten Körnern und beginnt zuerst dort mit einem sehr wucherndem Wachstum. Dies kann soweit gehen, dass einzelne Partien des Nährsubstrates bevor es bereit ist für die Saat, mit Myzel vollständig durchwachsen wird und einzelne Klumpen von Kornmasse und Myzel sich bilden. Die Aussaat wird dadurch aufwendiger und es ergeben sich Massierungen von Brutmasse in dem Kompostbeet und von traupenartig verklumpt, verwachsenen Pilzen.

Der Erfindung wurde nun die Aufgabe gestellt, ein Nährsubstrat beziehungsweise Brutmaterial herzustellen, das die Nachteile der bekannten Produkte nicht aufweist und optimale Bedingungen für das Wachstum des Myzels im Brutmaterial sowie später das Auswachsen des Myzels vom Brutkorn in dem Kompost bietet.

Das erfindungsgemässe Nährsubstrat ist dadurch gekennzeichnet, dass es aus Fruchtkörpern beziehungsweise Samen von Pflanzen wie zum Beispiel Getreidekörner besteht, die im Überschusswasser auf 40 bis 60 % Wassergehalt unter Erhaltung der Kornstruktur aufgequollen und frei von störenden Fremdkeimen sind. Es ist erkannt worden, dass bei allen bisherigen Ansätzen für die Herstellung eines Nährsubstrates von der Fachwelt wichtige Tatsachen übersehen wurden. Die bekannte thermische Sterilisation von Nahrungsmitteln ist für ein Nährsubstrat nicht erforderlich. Die Nahrungsmittelsterilisation wird für eine möglichst lange Haltbarkeit der entsprechenden Konserven, durchgeführt, damit alle möglichen Veränderungsvorgänge gestopt und insbesondere aber alle Abbauvorgänge auch bei Raumtemperatur möglichst lange verzögert werden. Bei dem Brutmaterial muss kein entsprechender Langzeit-Abbau verhindert werden. Im Gegenteil, es wird eine viel raschere Verwertung der Kornmasse innert wenigen Wochen durch das Myzel gewünscht. Nur dazu soll das Korn vorbereitet werden.

Mit einer chemischen Behandlung werden die in Überschusswasser gequollenen Körner ihrer Oberfläche keimfrei gemacht. Zuvor werden die Körner gereinigt und unerwünschte Körner aussortiert, wobei die Fruchtschalen intakt bleiben beziehungsweise nicht zerstört werden sollen.

Es genügt eine aseptische Behandlung mit mässiger Wärme von weniger als 100°C vorzugsweise von 50° bis 99°C und eine Desinfektion mit einem chemischen Desinfektionsmittel, die in diesen besonderen Fällen den gleichen Nutzeffekt hat wie eine medizinische Sterilisation mit der entsprechenden Zeit bei Temperaturen über 122°C, wie mit Laborversuchen eindeutig bestätigt werden konnte. Mit einer längeren Aufquelldauer bei mehr als 50°C wird zudem der Fruchtkörper- beziehungsweise Samenkeimling abgetötet.

Die Erfindung erlaubt eine ganze Reihe besonders vorteilhafter Ausgestaltungen des Brutmaterials. Jedes Einzelkorn des Nährsubstrates weist einen an sich bekannten basischen Puderüberzug auf, der mehr als 5 % vorzugsweise mehr als 10 % der Kornmasse beträgt. Besonders bevorzugt wird jedes Einzelkorn direkt auf der Fruchtkörperschale und unter dem Puderbezug mit einer Haftsubstanz beschichtet. Dazu wird vorgeschlagen, dass ein sauer wirkendes Nährmedium als Haftsubstanz gewählt wird, so dass die Menge des basischen Puderüberzuges sowie die Menge der sauer wirkenden Haftsubstanz wenigstens angenährt ein pH-Wert im Bereich von 7 ergeben. Weiterhin ist es sehr vorteilhaft, wenn die Haftsubstanz zumindest teilweise wachstumsfördernde Vitamine und/oder schützende Wirkstoffe enthält und zum Beispiel auf Mischfettsäuren beziehungsweise pflanzlichen Oelen oder deren Nebenprodukte usw. aufgebaut ist. Das Nährsubstrat besteht zweckmässig aus ganzen, gereinigten beziehungsweise sortierten Getreidekörnern mit im wesentlichen intakter Samen- und Fruchtschale, wobei der Bruchkornanteil und Gesamtbesatz weniger als 3 % vorzugsweise weniger als 1 % beträgt.

Das von dem Nährsubstrat hergestellte Brutmaterial weist aufgrund einer gezielten, regelmässigen und wesentlich stärkeren Beschichtung eine ganz besonders streufähige, klumpenfreie Beschaffenheit auf.

Die Erfindung betrifft ferner die Verwendung des Nährsubstrates für die Herstellung von Brutmaterial, für die Aussaat in einem Kompostbeet oder als Impfmaterial zur Herstellung grosser Mengen Brutmaterial.

In der Folge wird das erfindungsgemässe Nährsubstrat beziehungsweise Brutmaterial an Hand von einigen Figuren erläutert. Es zeigen:

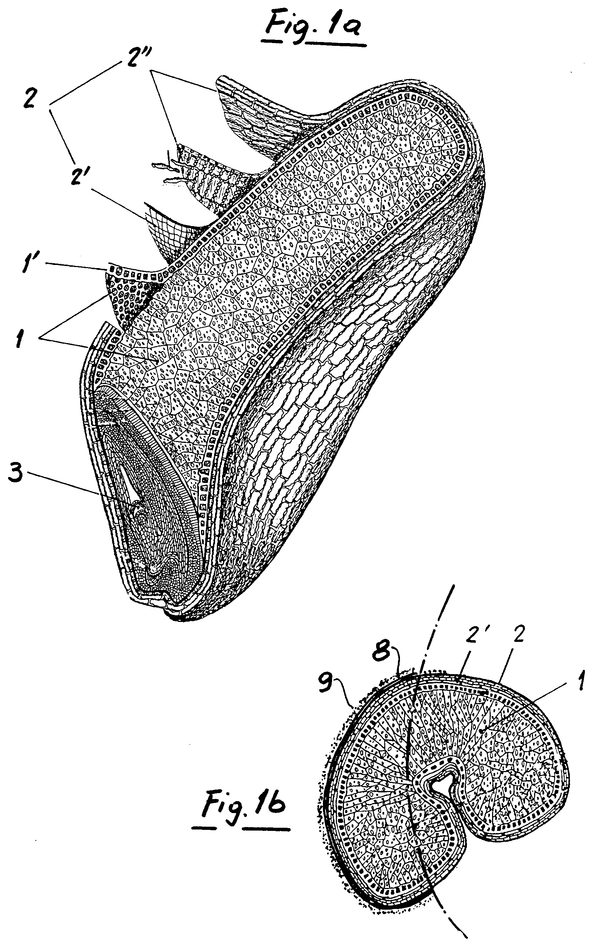

- die Figur 1a: einen Längsschnitt durch ein Getreidekorn etwa 30-fach vergrössert und
- die Figur 1b: ein beschichtetes Korn als Querschnitt der Figur 1a.

Wie aus dem an sich bekannten Querschnitt eines Weizenkornes in der Figur 1 hervorgeht, hat dieses einen sehr komplexen Strukturaufbau. Im wesentlichen besteht ein Korn aus dem Endosperm 1, dem eigenlichen Mehlkörper mit der Aleuronschicht 1', einer Schale 2, welche zusammengesetzt ist aus einer Samenschale 2' und mehreren Fruchtschalen 2'', ferner den Keimling 3. In der Figur 1b ist ein Querschnitt des Weizenkornes dargestellt und schematisch eine unmittelbar auf die Schale 2 aufgetragene und diese überziehende Haftschicht 8 aus einer Haftsubstanz sowie ein, das Korn ummantelnder, an der Haftschicht 8 haftenden Puderüberzug 9 eingezeichnet. Die Figuren 1a und 1b illustrieren sehr anschaulich, dass das natürliche Samenkorn eine ganze Anzahl Barrieren beziehungsweise Schutzschichten aufweist, die gleichzeitig mehrere Funktionen haben. Es soll verhindert werden, dass Wasser unkontrolliert eindringt. Der Same soll auch geschützt sein gegen ein leichtes Beschädigen, damit weder Oberflächenschäden noch Kornbruch entsteht. In einem gewissen Umfang kann sich das lebende Korn auch gegen das Eindringen von Fremdmikroben innerhalb der Endospermzelle zur Wehr setzen.

Erfindungsgemäss ist nun erkannt worden, dass nach Möglichkeit die Schalen intakt bleiben sollen, so dass auch das Pilzmyzel nicht unmittelbar in den Mehlkörper einwachsen kann. Ist aber der Mehlkörper 1 freigelegt, sei es durch Platzen bei dem Aufquellen durch zu grosse mechanische Einwirkung, bekommt das Pilzmyzel gleichsam luxurierende Bedingungen, so dass zwei unterschiedliche Wachstumsgeschwindigkeiten entstehen. Die erste, langsame Wachstumsgeschwindigkeit ergibt sich durch das vergleichsweise erste, mühsame Durchdringen der Schalen und die dadurch bedingte Zeitverzögerung, da ein rascheres Wachstum erst bei der Verwertung des Mehlkörpers möglich wird. Dagegen findet auf allen Stellen eines Kornes, bei denen Stärke und Eiweiss blossgelegt sind, ein sofortiges Wachstum statt. Dies hat nun zur Folge, dass in einem Gemisch aus ganzen und beschädigten Körnern die ganzen Körner nach der Impfung mit Myzel nur langsam bewachsen werden, wogegen eine Vielzahl von Körnern im Bereich eines beschädigten Kornes ganz den wilden Wuchs des Myzels auf dem freigelegten Mehlkörper rasch durchwachsen werden, so dass sich einzelne Kornklumpen bilden, die mit dem Wildwuchs des Myzels analog zu einem Schimmelpilzbewuchs zusammengehalten werden. Dies ergibt nicht nur ein Verlust an Brutmaterial sondern erschwert erheblich die freie Aussaat auf das Kompostbeet.

Erfindungsgemäss wird gefordert, dass das Einzelkorn möglichst vollständig intakt ist, insbesondere sollen die Schutzschalen nicht zerstört sein. Diese werden von dem Pilzmyzel ebenfalls verwertet. Durch das Beschichten des ganzen Kornes mit einer Haftschicht 8 die gleichzeitig einen grösseren Puderüberzug erlaubt, erhält das Brutmaterial ein völlig anderes Myzel-Anfangswachstum, und weist auch im Reifezustand eine sehr gute Streufähigkeit auf. Das Myzel-Anfangswachstum kann durch zwei Massnahmen gesteuert werden. Durch bestimmte Wahl von basischem Puder und saurer Haftsubstanz ergibt sich ein, das Myzelwachstum begünstigender, neutraler pH-Wert von etwa 7. Wird die Haftschicht zusätzlich mit wachstumsfördernden Wirkstoffen und Nährstoffen angereichert, so findet das Myzel ideale Wachstumsbedingungen rund um die Kornschale, insbesondere unter der Puderschicht. Es wird damit erreicht, dass die Kornoberfläche zuerst vollständig bewachsen wird, entlang dem ersten leicht zugänglichen Nährstoffangebot. Der Mehlkern bleibt dabei vorerst als Startnährsubstanz für das Kompostbeet vollständig erhalten und erlaubt in dieser zweiten Phase dem Myzelwachstum ideale Bedingungen.

Das erfindungsgemässe Nährsubstrat beziehungsweise Brutmaterial erlaubt damit die bestmögliche Erhaltung der Nährsubstanz für seine eigentliche Zweckbestimmung, als Wachstumskeim in dem Kompostbeet. Es geht keine Nährsubstanz durch Myzelwildwuchs verloren und erlaubt durch eine optimale Streufähigkeit ein gleichmässiges Ausbringen in das Kompostbeet. Wirtschaftlich ergibt sich der Vorteil eines regelmässigen und beschleunigten Auswachsens und damit eine Beschleunigung des Produktionsprozesses.

## Patentansprüche

1. Nährsubstrat von körniger Beschaffenheit für eine Mikroorganismenkultur in Reinkultur,
**dadurch gekennzeichnet,**
dass es aus Fruchtkörpern beziehungsweise Samen von Pflanzen besteht die im Überschusswasser auf 40 - 60 % Wassergehalt unter Erhaltung der Kornstruktur gequollen und frei von störenden Fremdkeimen sind.

2. Nährsubstrat nach Anspruch 1,
**dadurch gekennzeichnet,**
dass die Fruchtkörper beziehungsweise Samen frei von thermisch bedingter Bräunung sind, und der Keimling abgetötet ist.

3. Nährsubstrat nach einem der Ansprüche 1 oder 2,
**dadurch gekennzeichnet,**
dass jedes Einzelkorn einen an sich bekannten basischen Puderüberzug aufweist, der vorzugsweise mehr als 5 %, besonders vorzugsweise mehr als 10 % der Kornmasse beträgt.

4. Nährsubstrat nach einem der Ansprüche 1 bis 3,
**dadurch gekennzeichnet,**
dass jedes Einzelkorn direkt auf der Fruchtkörperschale unter dem Puderbezug eine Haftsubstanz aufweist.

5. Nährsubstrat nach Anspruch 4,
**dadurch gekennzeichnet,**
dass die Haftsubstanz eine sauer wirkende Nährsubstanz ist, und dass vorzugsweise die Menge des basischen Puderüberzuges sowie die Menge der sauer wirkenden Haftsubstanz zusammen wenigstens angenähert einen pH-Wert im Bereich von 7 ergeben.

6. Nährsubstrat nach Anspruch 4 oder 5,
**dadurch gekennzeichnet,**
dass die Haftsubstanz zumindest teilweise wachstumsfördernde und/oder schützende Wirkstoffe, vorzugsweise Mischfettsäuren, ganz besonders vorzugsweise Pflanzenöle enthält.

7. Nährsubstrat nach einem der Ansprüche 1 bis 5,
**dadurch gekennzeichnet,**
dass die Fruchtkörper ganze Getreidekörner sind, mit im wesentlichen intakter Samen- und Fruchtschale, wobei der Bruchkornanteil und/oder Gesamtbesatz weniger als 3 % vorzugsweise weniger als 5 % beträgt.

8. Nährsubstrat nach einem der Ansprüche 1 bis 7,
**dadurch gekennzeichnet,**
dass die Fruchtkörper beziehungsweise Samen, Getreidekörner vorzugsweise Roggen oder Hirsekörner sind.

9. Nährsubstrat nach einem der Ansprüche 1 bis 8,
**dadurch gekennzeichnet,**
dass es mit einer Myzelkultur zur Erzeugung eines Brutmaterials für die Züchtung von Speisepilzen versehen wurde.

10. Brutmaterial insbesondere nach Anspruch 9,
**dadurch gekennzeichnet,**
dass das aus dem Nährsubstrat hergestellte Brutmaterial eine regelmässig durchwachsene, streufähige, klumpenfreie Beschaffenheit aufweist, dadurch, dass dominant das Einzelkorn mit Pilzmyzel umwachsen ist.

11. Verwendung des Brutmateriales insbesondere nach Anspruch 10 für die Speisepilzzucht in einem Kompostbeet oder als Impfmaterial zur Herstellung grosser Mengen Brutmaterial.
